# EUROPÄISCHE PATENTSCHRIFT

(11) **EP 3 569 352 B1**
(45) Veröffentlichungstag und Bekanntmachung des Hinweises auf die Patenterteilung: **18.01.2023**
(21) Anmeldenummer: 19163493.0
(22) Anmeldetag: 18.03.2019
(51) Int. Cl.: B23Q 1/00

(54) **SPANNELEMENT EINES SPANNSYSTEMS, INSBESONDERE EINES NULLPUNKTSPANNSYSTEMS, UND SPANNSYSTEM**
CLAMPING SYSTEM AND CLAMPING ELEMENT OF A CLAMPING SYSTEM, IN PARTICULAR OF A ZERO POINT CLAMPING SYSTEM
ÉLÉMENT DE SERRAGE D'UN SYSTÈME DE SERRAGE, EN PARTICULIER D'UN SYSTÈME DE SERRAGE POINT ZÉRO, ET SYSTÈME DE SERRAGE

(30) Priorität: 15.05.2018 DE 102018111618
(43) Veröffentlichungstag der Anmeldung: 20.11.2019
(73) Patentinhaber: Heinz-Dieter Schunk GmbH & Co. Spanntechnik KG, 88512 Mengen (DE)
(72) Erfinder: EBE, Frank, 88499 Riedlingen (DE); KOCH, Alexander, 88512 Mengen (DE)
(74) Vertreter: DREISS Patentanwälte PartG mbB

(56) Entgegenhaltungen:
- DE-A1-102017 119 822
- US-A1- 2004 113 346

## Beschreibung

Die Erfindung betrifft ein Spannelement eines Spannsystems, insbesondere eines Nullpunktspannsystems, wobei das Spannelement zur Anordnung an ein zu spannendes Bauteil und zum Verriegeln an oder in einer Spannaufnahme eines Spannmoduls ausgebildet ist. Das Spannelement ist als Spannbolzen ausgebildet und weist einen um eine Mittelachse verlaufenden Einzugsabschnitt auf, gegen den Verriegelungselemente des Spannmoduls zum Einziehen und Verriegeln des Spannelements wirken. Der Einzugsabschnitt kann insbesondere konusflächig ausgebildet sein. Ferner weist das Spannelement eine Auflagefläche zur Auflage an dem zu spannenden Bauteil auf.

Aus der EP 0 858 863 A1 ist ein Spannelement in Form eines Spannbolzens bekannt, der eine die Auflagefläche in radialer Richtung umgebende Ringnut und eine die Ringnut in radialer Richtung umgebenden, in radialer Richtung elastisch nachgiebig ausgebildeten Ringsteg vorsieht. Dadurch, dass der Ringsteg in radialer Richtung elastisch nachgiebig ausgebildet ist, kann eine selbsttätige Zentrierung des Spannbolzens in der Spannaufnahme erfolgen. Ferner können unerwünschte Eigenspannungen im gespannten Bauteil, insbesondere bei Verwendung von mehreren Spannbolzen an einem Bauteil, unterbunden werden.

Bei Nullpunktspannmodulen handelt es sich um Spannmodule, mit denen zu bearbeitende Werkstücke oder Werkstückträger wiederholbar positionsgenau gespannt werden können. Dabei ist denkbar, dass mehrere Spannmodule gemeinsam auf einen Träger, beispielsweise auf einem Spanntisch oder einer Spannplatte, vorgesehen werden, um größere Werkstücke mittels mehreren an dem Werkstück oder an dem Werkstückträger vorgesehenen Spannbolzen zu spannen.

Spannmodule zur Aufnahme von Spannelementen in Form Spannbolzen oder Spannringen sind beispielsweise aus der DE 10 2010 010 898 A1, der EP 1 707 307 A1 oder der DE 10 2010 013 911 A1 bekannt. Bei dem zu spannenden Bauteil kann es sich beispielsweise um ein zu bearbeitendes Werkstück oder um einen Werkstückträger handeln. Die Spannelemente werden dann zum positionsgenauen Spannen im oder am jeweiligen Spannmodul verriegelt.

Ein Spannelement ist aus der DE 10 2017 119 822 A1, die zum Stand der Technik nach Art. 54(3) EPÜ gehört, bekannt Diese Druckschrift offenbart ein Spannelement eines Spannsystems, wobei das Spannelement als Spannbolzen ausgebildet ist, und wobei das Spannelement zur Anordnung an ein zu spannendes Bauteil und zum Verriegeln in oder an einer Spannaufnahme eines Spannmoduls ausgebildet ist, mit einem um eine Mittelachse verlaufenden Einzugsabschnitt, gegen den Verriegelungselemente des Spannmoduls zum Einziehen und Verriegeln des Spannelements wirken, mit einer Auflagefläche zur Auflage an dem Bauteil, mit einer die Auflagefläche in radialer Richtung umgebende Ringnut und mit einem die Ringnut in radialer Richtung umgebenden, wenigstens abschnittsweise in radialer Richtung elastisch nachgiebig ausgebildeten Ringsteg , wobei der Ringsteg mehrere sich in radialer Richtung erstreckende Durchbrüche aufweist.

Der Erfindung liegt die Aufgabe zugrunde, ein Spannelement der eingangs genannten Art derart weiterzubilden, dass dieser beim Einführen und Verriegeln zum einen sicher in der Spannaufnahme zentriert wird und zum anderen nicht beschädigt wird. Ferner soll das Spannelement spielfrei verriegelt werden können.

Diese Aufgabe wird gelöst durch ein Spannelement mit den Merkmalen des Patentanspruchs 1. Im Unterschied zum Stand der Technik gemäß der EP 0 858 863 A1 sieht das erfindungsgemäße Spannelement folglich vor, dass der Ringsteg mehrere sich in radialer Richtung erstreckende Durchbrüche aufweist. Diese Durchbrüche führen dazu, dass der Ringsteg in radialer Richtung elastisch nachgiebig ausgebildet wird. Je nach Anzahl und Größe der vorzusehenden Durchbrüche kann die elastische Nachgiebigkeit eingestellt werden. Das Vorsehen von Durchbrüchen hat ferner den Vorteil, dass diese auf einfache Art und Weise in den Ringsteg eingebracht werden können.

Die EP 0 858 863 A1 sieht im Gegensatz dazu einen in radialer Richtung geschlossenen Ringsteg vor. Im Ringsteg selber können gemäß diesem Stand der Technik zwar Sackbohrungen vorgesehen sein, die parallel zur Mittelachse verlaufen. Eine Einstellung der elastischen Nachgiebigkeit mittels den Sacklöchern ist nicht oder nur sehr bedingt möglich. Anders als der Stand der Technik geht die vorliegende Erfindung einen Schritt weiter und öffnet den Ringsteg in radialer Richtung durch Vorsehen der Durchbrüche. Eine elastische Nachgiebigkeit kann hierdurch auf einfache Art und Weise günstig eingestellt werden.

Das Spannelement ist als Spannbolzen ausgebildet. Hier liegen die Ringnut und der Ringsteg bezüglich der Auflagefläche radial außen.

Vorteilhafterweise sind die Durchbrüche in äquidistanten Winkelabständen um die Mittelachse angeordnet. Es hat sich gezeigt, dass insgesamt 10 bis 20 Durchbrüche und vorzugsweise 16 Durchbrüche vorteilhaft sind.

Die Durchbrüche können dabei als Rundlöcher, als Ovallöcher und/oder als Langlöcher ausgebildet sein.

Besonders vorteilhaft ist, wenn die Durchbrüche hin zum Bauteil randoffen ausgebildet sind, so dass die Durchbrüche insbesondere als einseitig offene Langlöcher ausgebildet sind. Der Ringsteg wird dann von einzelnen, sich in axialer Richtung erstreckenden Lamellen gebildet.

Es ist vorgesehen, dass die Auflagefläche in einer senkrecht zur Mittelachse verlaufenden Auflageebene liegt und dass der Ringsteg, beziehungsweise die Lamellen, eine dem zu spannenden Bauteil zugewandte Unterseite aufweist, die in einer senkrecht zur Mittelachse verlaufenden Ringebene liegt, wobei die Ringebene um ein Maß x, mit x > 0, von der Auflageebene in Richtung weg vom Bauteil beanstandet angeordnet ist. Beim montierten Spannelement liegt folglich die Auflageebene am Bauteil an und die Ringebene ist um das Maß x vom Bauteil beanstandet. Dadurch kann ein ungehindertes elastisches Verformen des Ringstegs beziehungsweise der den Ringsteg bildenden Lamellen gewährleistet werden.

Das Maß x ist dabei vorteilhafterweise so groß, dass bei elastisch verformten Ringsteg beziehungsweise elastisch verformten Lamellen die Unterseite des Ringstegs beziehungsweise der Lamellen nicht in Berührkontakt mit dem Bauteil kommt.

Die Durchbrüche zwischen den Lamellen können vorzugsweise als randoffene Langlöcher ausgebildet sein, wobei die Langlöcher dann an der der offenen Seite gegenüberliegenden Seite jeweils einen vorzugsweise entlang einer Kreisbahn verlaufenden Grund aufweisen.

Vorteilhafterweise sind die Lamellen in radialer Ansicht quadratisch oder im Wesentlichen quadratisch ausgebildet. Es hat sich gezeigt, dass gerade die quadratische Ausbildung der Lamellen mit einer Kantenlänge x zu günstigen elastischen Eigenschaften führt.

Ferner ist vorteilhaft, wenn die Lamellen im Längsschnitt auf der dem Bauteil zugewandten Seite einen Rechteckabschnitt und einen sich daran anschließenden, sich verjüngenden Konusabschnitt aufweisen. Der Rechteckabschnitt weist im Querschnitt eine rechteckige Kontur auf. Die Mantelfläche des Rechteckabschnitts verläuft dazu parallel oder im Wesentlichen parallel zur gegenüberliegenden, an die Ringnut angrenzenden Fläche. An den Rechteckabschnitt schließt sich dann der sich verjüngende Konusabschnitt an, dessen Mantelfläche sich mit zum Bauteil zunehmendem Abstand verjüngt.

Weiterhin ist vorteilhaft, wenn der Konusabschnitt auf der dem Rechteckabschnitt abgewandten Seite eine quer zur Mittelachse verlaufende Biegekante aufweist. Dadurch kann eine Art definiertes Festkörpergelenk zur elastischen Verformung der Lamellen bereitgestellt werden.

Die eingangs genannte Aufgabe wird auch gelöst durch ein zu spannendes Bauteil mit wenigstens einem erfindungsgemäßen Spannelement.

Die eingangs genannte Aufgabe wird auch gelöst durch ein Spannsystem mit einem zu spannenden Bauteil, welches wenigstens einen erfindungsgemäßen Spannelement vorsieht.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen:
- Figur 1: ein erstes erfindungsgemäßes Spannelement in isometrischer Ansicht;
- Figur 2: die Unteransicht des Spannbolzens gemäß Figur 1;
- Figur 3: die Seitenansicht des Spannbolzens gemäß Figur 1;
- Figur 4: einen Längsschnitt durch den Spannbolzen gemäß Figur 1; und
- Figur 5: einen vergrößerte Ausschnitt aus Figur 4.

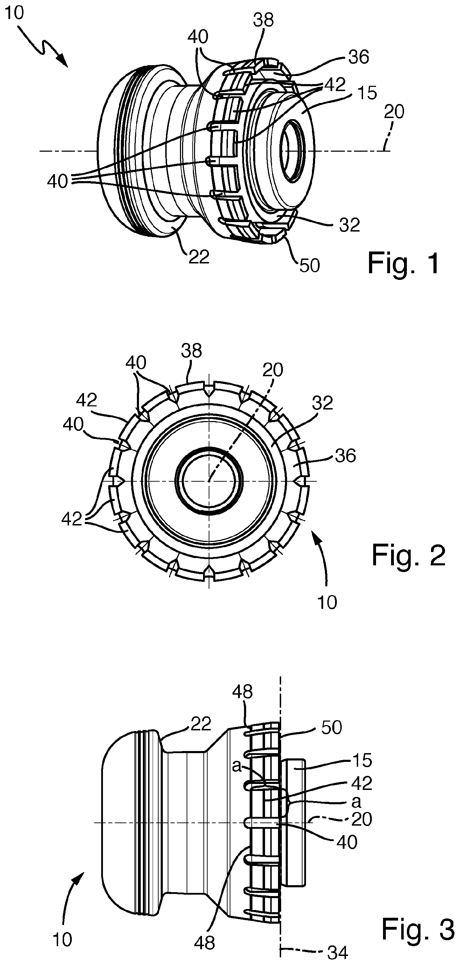

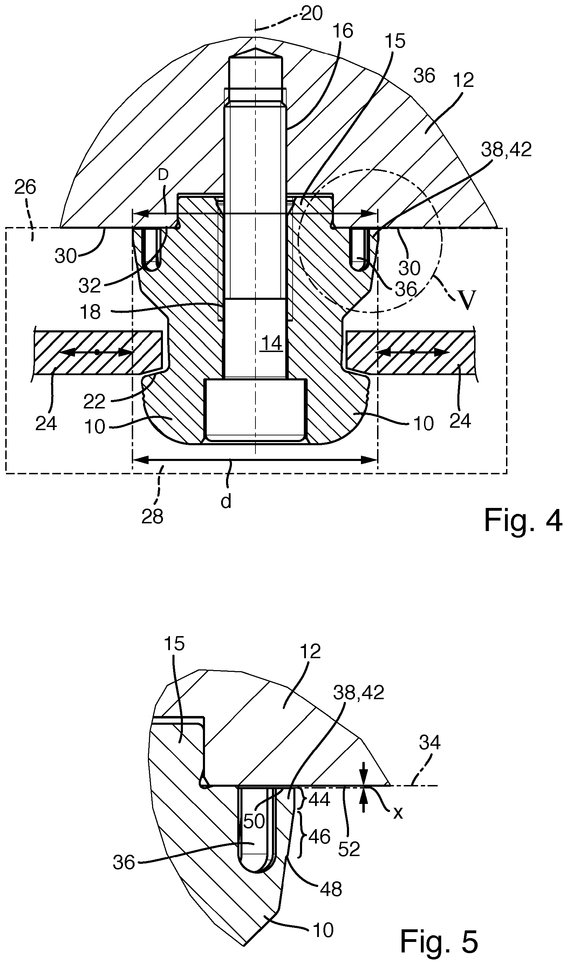

In den Figuren 1 bis 4 ist eine erfindungsgemäße Ausführungsform der Erfindung gezeigt, bei der das Spannelement in Form eines Spannbolzens 10 ausgebildet ist. Der Spannbolzen 10 dient dabei zur Anordnung an ein zu spannendes Bauteil 12, das in Figur 4 abschnittsweise gezeigt ist und beispielsweise als Werkstück oder Werkstückträger ausgebildet sein kann. Wie aus Figur 4 deutlich wird, dient zur Befestigung des Spannbolzens 10 eine Befestigungsschraube 14, die den Spannbolzen 10 durchgreift und in ein am Bauteil 12 vorgesehenes Gewinde 16 eingeschraubt ist. Der Spannbolzen 10 sieht hierfür eine zentrale Bohrung 18 vor. Die Schraube 14 beziehungsweise die Bohrung 18 verlaufen dabei entlang einer Mittelachse 20 des Spannbolzens 10. Der Spannbolzen 10 weist zudem einen erhabenen, ringartigen Zentrierabschnitt 15 auf, der in eine am Bauteil 12 vorgesehen Ringaufnahme zur positionsgenauen Anordnung des Spannbolzens 10 am Bauteil 12 eingesetzt wird.

Wie aus den Figuren 1 bis 4 deutlich wird, weist der Spannbolzen 10 einen um die Mittelachse 20 verlaufenden Einzugsabschnitt 22 auf. Zur Verriegelung des Spannbolzens 10 in einem in Figur 4 angedeuteten Spannmodul 26 sind im Spannmodul 26 Verriegelungselemente 24 vorgesehen, die gegen den Einzugsabschnitt 22 wirken. Die Verriegelungselemente 24 können dabei in radialer Richtung verlagert werden und als Spannschieber oder als Verriegelungskugeln ausgebildet sein. Beim Verlagern der Verriegelungselemente 24 nach radial innen wirken diese mit den Einzugsabschnitten 22 derart zusammen, dass der Spannbolzen 10 in die Spannaufnahme 28 eingezogen wird. Durch Verriegelung des Spannbolzens 10 im Spannmodul 26 wird das Bauteil 12 gegen eine am Spannmodul 26 vorgesehene Anlagefläche 30 beaufschlagt.

Wie aus insbesondere den Figuren 1 bis 3 deutlich wird, weist der Spannbolzen 10 eine ringartige Auflagefläche 32 zur Auflage an dem Bauteil 12 auf. Die Auflagefläche 32 liegt dabei in einer senkrecht zur Mittelachse 20 verlaufenden, in Figur 3 und 5 angedeuteten Auflageebene 34. Ferner ist eine Ringnut 36 vorgesehen, die die Auflagefläche 32 radial außen umgibt sowie ein Ringsteg 38, der die Ringnut 36 radial außen umgibt.

Der Ringsteg 38 weist dabei mehrere sich in radialer Richtung durch den Ringsteg 38 hindurch erstreckende Durchbrüche 40 auf. Wie aus insbesondere Figur 2 deutlich wird, sind insgesamt 16 Durchbrüche 40 vorgesehen. Die Durchbrüche 40 sind als Langlöcher ausgebildet und hin zum Bauteil 12 randoffen ausgebildet. Insgesamt bildet der Ringsteg 38 dadurch einzelne, sich in axialer Richtung erstreckende Lamellen 42 mit einer Breite a und einer Länge a. In Summe sind 16 Lamellen 42 vorgesehen, die jeweils um die Mittelachse 20 herum äquidistant angeordnet sind.

Aus der Vergrößerung gemäß Figur 5 wird deutlich, dass die Lamellen 42 im durch die Mittelachse 20 verlaufenden Längsschnitt auf der dem Bauteil 12 zugewandten Seite einen Rechteckabschnitt 44 und einen sich an den Rechteckabschnitt 44 anschließenden, sich in Richtung weg vom Bauteil 12 verjüngenden Konusabschnitt 46 aufweisen. Der Konusabschnitt 46 wird ferner auf der dem Rechteckabschnitt 44 abgewandten Seite von einer quer zur Mittelachse 20 verlaufenden Biegekante 48 begrenzt.

Durch die Ausbildung der Lamellen 42 mit Rechteckabschnitt 44, Konusabschnitt 46 und Biegekante 48 wird eine Lamelle mit einer günstigen Geometrie bereitgestellt, wobei im Bereich der Biegekante 48 eine Art Festkörpergelenk zur elastischen Nachgiebigkeit der Lamellen 42 bei in radialer Richtung hin zur Mittelachse 20 auf die Lamellen 42 wirkenden Kräfte bereitgestellt wird.

Aus Figur 5 wird ferner deutlich, dass der Ringsteg 38, beziehungsweise die Lamellen 42, eine dem zu spannenden Bauteil zugewandte Unterseite 50 aufweisen, wobei die Unterseite 50 in einer senkrecht zur Mittelachse 20 verlaufenden Ringebene 52 liegt. Wie aus der Vergrößerung gemäß Figur 5 deutlich wird, ist die Ringebene 52 zur Auflageebene 34 um das Maß x beabstandet. Das Maß x ist dabei so gewählt, dass die einzelnen Lamellen 42 in axialer Richtung derart elastisch verformt werden können, dass die Unterseiten der Lamellen 50 nicht mit dem Bauteil 12 in Berührkontakt kommen.

Um eine geeignete Zentrierung des Spannbolzens 10 in der Spannaufnahme 28 zu gewährleisten, ist vorteilhaft, wenn der Außendurchmesser D des Spannbolzens 10 auf Höhe der Rechteckabschnitte 44 beziehungsweise in der Ringebene 52 geringfügig größer ist wie der Innendurchmesser d der Spannaufnahme 28. Dadurch kann der Spannbolzen 10 spielfrei und unter Vorspannung in die Spannaufnahme 28 eingeführt werden.

## Patentansprüche

1. Spannelement (10) eines Spannsystems, insbesondere eines Nullpunktspannsystems, wobei das Spannelement (10) als Spannbolzen (10) ausgebildet ist, und wobei das Spannelement (10) zur Anordnung an ein zu spannendes Bauteil (12) und zum Verriegeln in oder an einer Spannaufnahme (28) eines Spannmoduls (26) ausgebildet ist, mit einem um eine Mittelachse (20) verlaufenden Einzugsabschnitt (22), gegen den Verriegelungselemente (24) des Spannmoduls (26) zum Einziehen und Verriegeln des Spannelements (10) wirken, mit einer Auflagefläche (32) zur Auflage an dem Bauteil (12), mit einer die Auflagefläche (32) in radialer Richtung umgebende Ringnut (36) und mit einem die Ringnut (36) in radialer Richtung umgebenden, wenigstens abschnittsweise in radialer Richtung elastisch nachgiebig ausgebildeten Ringsteg (38), wobei der Ringsteg (38) mehrere sich in radialer Richtung erstreckende Durchbrüche (40) aufweist, wobei die Auflagefläche (32) in einer senkrecht zur Mittelachse verlaufenden Auflageebene (34) liegt, und wobei der Ringsteg (38) eine dem zu spannenden Bauteil (12) zugewandte Unterseite aufweist, die in einer senkrecht zur Mittelachse verlaufenden Ringebene (52) liegt, wobei die Ringebene (52) um ein Maß x, mit x > 0, von der Auflageebene (34) in Richtung weg vom Bauteil (12) beabstandet angeordnet ist.

2. Spannelement (10) nach Anspruch 1, **dadurch gekennzeichnet, dass** die Durchbrüche (40) in äquidistanten Winkelabständen um die Mittelachse (20) angeordnet sind.

3. Spannelement (10) nach Anspruch 1 oder 2, **dadurch gekennzeichnet, dass** die Durchbrüche (40) als Rundlöcher, als Ovallöcher oder als Langlöcher ausgebildet sind.

4. Spannelement (10) nach Anspruch 1, 2 oder 3, **dadurch gekennzeichnet, dass** die Durchbrüche (40) hin zum Bauteil randoffen ausgebildet sind, so dass der Ringsteg (38) von einzelnen, sich in axialer Richtung erstreckenden Lamellen (42) gebildet wird.

5. Spannelement (10) nach Anspruch 4, **dadurch gekennzeichnet, dass** die Lamellen (42) in radialer Ansicht quadratisch oder im Wesentlichen quadratisch ausgebildet sind.

6. Spannelement (10) nach Anspruch 4 oder 5, **dadurch gekennzeichnet, dass** die Lamellen (42) im Längsschnitt auf der dem Bauteil zugewandten Seite einen Rechteckabschnitt (44) und einen sich daran anschließenden, sich verjüngen Konusabschnitt (46) aufweisen.

7. Spannelement (10) nach Anspruch 6, **dadurch gekennzeichnet, dass** der Konusabschnitt (46) auf der dem Rechteckabschnitt (44) abgewandten Seite eine quer zur Mittelachse verlaufende Biegekante (48) aufweist.

8. Spannelement (10) nach einem der vorangehenden Ansprüche, **dadurch gekennzeichnet, dass** das Maß x so gewählt ist, dass bei elastisch verformtem Ringsteg (38) die Unterseite (50) des Ringstegs (38) nicht in Berührungskontakt mit dem Bauteil (12) kommt.

9. Zu spannendes Bauteil (12) mit wenigstens einem Spannelement (10) nach wenigstens einem der vorhergehenden Ansprüche.

10. Spannsystem mit einem zu spannenden Bauteil (12) mit wenigstens einem und vorzugsweise zwei oder mehr Spannelemente (10) gemäß einem der Ansprüche 1 bis 6, und mit wenigstens einem und vorzugsweise zwei oder mehr Spannmodulen (26) zur Aufnahme und Verriegelung des wenigstens einen Spannelements (10).

## Claims

1. Clamping element (10) of a clamping system, in particular of a zero-point clamping system, wherein the clamping element (10) is configured as a clamping bolt (10) and wherein the clamping element (10) is configured for being arranged on a component (12) to be clamped and for locking in or on a clamping seat (28) of a clamping module (26), the element having a recessed portion (22) extending around the center axis (20) against which locking elements (24) of the clamping module (26) act for retracting and locking the clamping element (10), with a supporting surface (32) for abutment with the component (12), with an annular groove (36) surrounding the supporting surface (32) in a radial direction and with an annular web (38) surrounding the annular groove (36) in a radial direction and being configured at least in sections elastically resilient in the radial direction, wherein the annular web (38) comprises a plurality of cutouts (40) extending in a radial direction, wherein the supporting surface (32) is situated in a supporting plane (34) extending perpendicular with respect to the center axis, and wherein the annular web (38) comprises a bottom facing the component (12) to be clamped, which bottom is situated in an annular plane (52) extending perpendicular with respect to the center axis, wherein the annular plane (52) is arranged at a distance with the dimension x from the supporting surface (34) in the direction away from the component (12), with x > 0.

2. Clamping element (10) as claimed in claim 1, **characterized in that** the cutouts (40) are arranged at equidistant angular distances around the center axis (20).

3. Clamping element (10) as claimed in claim 1 or 2, **characterized in that** the cutouts (40) are configured as round holes, oval holes or oblong holes.

4. Clamping element (10) as claimed in claim 1, 2 or 3, **characterized in that** the cutouts (40) are configured with an open edge towards the component so that the annular web (38) is formed by single lamellae (42) extending in an axial direction.

5. Clamping element (10) as claimed claim 4, **characterized in that** the lamellae (42) are configured square or substantially square when viewed in the radial direction.

6. Clamping element (10) as claimed claim 4 or 5, **characterized in that** the lamellae (42), in a longitudinal section, have a rectangular portion (44) on the side facing the component and an adjacent tapering conical portion (46).

7. Clamping element (10) as claimed claim 6, **characterized in that** the conical portion (46) has a bending edge (48) on the side facing away from the rectangular portion (44) and extending transversely with respect to the center axis.

8. Clamping element (10) as claimed in one of the preceding claims, **characterized in that** the dimension x is chosen such that the bottom (50) of the annular web (38) does not contact the component (12) when the annular web (38) is elastically deformed.

9. Component (12) to be clamped with at least one clamping element (10) as claimed in at least one of the preceding claims.

10. Clamping system with a component (12) to be clamped with at least one or preferably two or more clamping elements (10) as claimed in one of claims 1 to 6 and with at least one or preferably two or more clamping modules (26) for receiving and locking the at least one clamping element (10).

## Revendications

1. Elément de serrage (10) d'un système de serrage, en particulier d'un système de serrage au point zéro, dans lequel l'élément de serrage (10) est réalisé sous la forme d'un boulon de serrage (10), et dans lequel l'élément de serrage (10) est réalisé pour être disposé sur une pièce (12) à serrer et être verrouillé dans ou sur un logement de serrage (28) d'un module de serrage (26), avec une partie d'insertion (22) s'étendant autour d'un axe médian (20), contre laquelle agissent des éléments de verrouillage (24) du module de serrage (26) pour insérer et verrouiller l'élément de serrage (10), avec une surface d'appui (32) destinée à être en appui sur la pièce (12), avec une rainure annulaire (36) entourant la surface d'appui (32) dans la direction radiale et avec une nervure annulaire (38) entourant la rainure annulaire (36) dans la direction radiale, réalisée au moins en partie de manière élastiquement flexible dans la direction radiale, dans lequel la nervure annulaire (38) présente plusieurs passages (40) s'étendant dans la direction radiale, dans lequel la surface d'appui (32) se situe dans un plan d'appui (34) s'étendant perpendiculairement à l'axe médian, et dans lequel la nervure annulaire (38) présente une face inférieure tournée vers la pièce (12) à serrer, qui se situe dans un plan annulaire (52) s'étendant perpendiculairement à l'axe médian, dans lequel le plan annulaire (52) est disposé de manière espacée du plan d'appui (34) d'une grandeur x, avec x > 0, dans une direction s'éloignant de la pièce (12).

2. Elément de serrage (10) selon la revendication 1, **caractérisé en ce que** les passages (40) sont disposés par intervalles angulaires équidistants autour de l'axe médian (20) .

3. Elément de serrage (10) selon la revendication 1 ou 2, **caractérisé en ce que** les passages (40) sont réalisés sous la forme de trous ronds, sous la forme de trous ovales ou sous la forme de trous oblongs.

4. Elément de serrage (10) selon la revendication 1, 2 ou 3, **caractérisé en ce que** les passages (40) sont réalisés de manière ouverte sur un bord en direction de la pièce, de sorte que la nervure annulaire (38) est formée par des lamelles (42) individuelles s'étendant dans la direction axiale.

5. Elément de serrage (10) selon la revendication 4, **caractérisé en ce que** les lamelles (42) sont réalisées de manière carrée ou sensiblement carrée en vue radiale.

6. Elément de serrage (10) selon la revendication 4 ou 5, **caractérisé en ce que** les lamelles (42) présentent en coupe longitudinale sur la face tournée vers la pièce une partie rectangulaire (44) et une partie conique (46) s'amincissant, se raccordant à celle-ci.

7. Elément de serrage (10) selon la revendication 6, **caractérisé en ce que** la partie conique (46) présente sur la face opposée à la partie rectangulaire (44) un bord de pliage (48) s'étendant transversalement par rapport à l'axe médian.

8. Elément de serrage (10) selon l'une quelconque des revendications précédentes, **caractérisé en ce que** la grandeur x est choisie de sorte que lorsque la nervure annulaire (38) est déformée élastiquement, la face inférieure (50) de la nervure annulaire (38) ne vient pas en contact avec la pièce (12) .

9. Pièce (12) à serrer avec au moins un élément de serrage (10) selon au moins l'une des revendications précédentes.

10. Système de serrage avec une pièce (12) à serrer avec au moins un et de préférence deux éléments de serrage (10) ou plus selon l'une quelconque des revendications 1 à 6, et avec au moins un et de préférence deux modules de serrage (26) ou plus pour la réception et le verrouillage de l'au moins un élément de serrage (10).
